# EUROPEAN PATENT APPLICATION

(11) **EP 4 177 087 A1**
(43) Date of publication of application: **10.05.2023**
(21) Application number: 21206117.0
(22) Date of filing: 03.11.2021
(51) Int. Cl.: B60G 11/04, B60G 11/10, B60G 17/005, B60G 11/107, B60G 17/017

(54) **SUPPORT DEVICE FOR A SUSPENSION ASSEMBLY**

(71) Applicant: KNORR-BREMSE Systeme für Nutzfahrzeuge GmbH, 80809 München (DE)
(72) Inventor: KRÜGER, Sven Philip, 81476 München (DE); BURGER, Samuel, 52062 Aachen (DE); GYÖRKE, Zsombor, 8360 Keszthely (HU); MLINÁRCSEK, Csaba, 1165 Budapest (HU); MONORI, Gyula, 6065 Lakitelek (HU); TOTH, Janos, 6000 Kecskemét (HU); HÖS, Levente, 1047 Budapest (HU)

(57) **Abstract**

A support device (12) for supporting a suspension assembly (10) mounted on a chassis of a vehicle, wherein the support device (12) comprises a pivotable lever (24) connected to an actuator device (32) for pivoting the lever (24), wherein the lever (24) comprises a support portion for supporting a spring device (14) of the suspension assembly (10) and wherein the lever (24) is arranged relative to the chassis such that pivoting of the lever (24) lifts or lowers the chassis relative to the spring device (14).A suspension assembly (10) comprises a spring device (14), wherein the spring device (14) is supported on at least one support device (12) as described above.

## Description

The present invention relates to a support device for supporting a suspension assembly mounted on a chassis of a vehicle.

Vehicle suspensions assemblies generally comprise a spring device, for example a leaf spring having two ends to be mounted on a chassis, also called frame, of the vehicle and a connection to an axle or wheel which is generally located in a central section between the two ends. Each of the two ends may be mounted in a different way on the chassis. It is, for example, known to provide a pivotable connection to the chassis on which the ends are mounted.

In suspension assemblies that have a leveling system, either one of the ends is mounted on a support device that can set the distance between the chassis and the leaf spring, for example an air spring bellows. In some embodiments, multiple such support devices are provided with or without multiple hydraulic lift or leveling jacks positioned at multiple locations under a vehicle for adjusting the characteristics of the leaf spring to suit different types of vehicle loading and/or height. Such arrangements can often be mechanically complicated to construct, may take up a lot of space and may thus be costly and complex to implement and maintain.

It is thus an objective of the present invention to provide a support device for supporting a suspension assembly mounted on the chassis of the vehicle which is compact, simple to install and economic to manufacture and maintain. It is a further objective of the invention to provide a suspension assembly that is compact, simple to install and economic to manufacture and maintain.

The objective is achieved by a support device according to claim 1 and suspension assembly according to claim 10.

The objective is achieved by a support device for supporting a suspension assembly mounted on a chassis of a vehicle, wherein the support device comprises a pivotable lever connected to an actuator device for pivoting the lever arm, wherein the lever comprises a support portion for contacting and supporting a spring device of the suspension assembly and wherein the lever is arranged relative to the chassis such that pivoting of the lever lifts or lowers the chassis relative to the support portion.

The lever, when turning or pivoting, positions the support portion, depending on the direction of the turn or pivot, at a higher or lower position (relative to the direction of gravity) and thus pushes the vehicle chassis up or lowers it down. This arrangement requires less maintenance than for example an air spring, the material of which will deteriorate relatively quickly over time. Furthermore, it allows for the use of low-maintenance and low-complexity actuators.

In further embodiments, the support portion comprises a shackle device for receiving a mounting portion of the spring device.

The shackle device couples the mounting portion of the spring device strong enough for transmitting enough lifting and/or lowering force but also allows the relative movement necessary to permit the angular changes of the lever arm relative to the spring device. Furthermore, the shackle device can compensate for changes in length of the spring device which can occur due to elastic deformation of the spring device under load.

In further embodiments, the lever arm and/or the actuator device are connected to a chassis of a vehicle.

This allows for the lever arm and/or the actuator device to control the distance between the spring device, e.g. the leaf spring, and the chassis.

In further embodiments, the actuator device comprises a bevel gear.

The bevel gear allows the actuator device to be arranged at a different angle than the actuation angle. This may particularly be useful for installations where positioning all of the parts of the actuator device in a linear fashion is disadvantageous because of insufficient installation space. In particular, the actuator device jutting out over the chassis may be avoided in this way, allowing for the space above the chassis to be used for cargo placement without limitations.

In further embodiments, the actuator device is connected to the lever by a spindle in threading connection with the lever.

Turning the spindle then pivots the lever. This is a very safe, cost-effective and easy to construct way of actuating the lever. It is particularly suitable for electromechanical actuator devices, e.g. motors.

In further embodiments, the support device comprises a lever locking device for locking the lever in a predetermined position.

The predetermined position may, for example, be a driving position. When the locking device locks the lever arm, it is fixed. That way, the lever locking device absorbs static and dynamic forces occuring between the leaf spring in the vehicle chassis that would otherwise need to be borne by the actuation device and/or the spindle.

In further embodiments, the support device comprises a mechanical energy storage device arranged and configured to receive mechanical energy from lowering the chassis and to release mechanical energy when lifting this chassis.

When the actuator device is operated to lift the chassis, the energy stored in the mechanical energy storage device is used to lower the force required by the actuator device to lift the chassis. This supports the spindle drive and reduces the driving force needed for actuation of the spindle when lifting the chassis. Also, energy demand for the lifting operation in the actuator is reduced. More generally, the maximum power requirement of the actuator will be reduced, which allows the use of a smaller, lighter, more compact and/or more cost-effective actuator.

In further embodiments, the mechanical storage device connects the lever to the chassis.

This is the easiest way to receive and release energy from or to the lever.

In further embodiments, the mechanical storage device comprises a spring.

Mechanical springs are probably the least maintenance-intensive and cost-effective mechanical storage devices.

The objective is further achieved by a suspension assembly comprising a spring device, wherein the spring device is supported on at least one support device according to any of the embodiments above.

Depending on which embodiment is chosen, the advantages are the same as above. In particular, a very compact, cost-effective and easily maintainable suspension assembly able to lift and lower the chassis of the vehicle is obtained.

Embodiments of the invention are now described in detail. Referring to the drawings, like numbers indicate like parts throughout the views. As used in the description herein and throughout the claims, the following terms take the meanings explicitly associated herein, unless the context clearly dictates otherwise: the meaning of "a," "an," and "the" includes plural reference, the meaning of "in" includes "in" and "on." Relational terms such as first and second, top and bottom, and the like may be used solely to distinguish one entity or action from another entity or action without necessarily requiring or implying any actual such relationship or order between such entities or actions. It will be understood that further embodiments fall into the scope of the invention as claimed without being described below. In the drawings:
- Fig. 1: shows a schematic drawing of a support device according to an embodiment of the present invention mounted in a suspension assembly;
- Fig. 2: shows a schematic drawing of the support device according to Fig. 1 in a locked position;
- Fig. 3: shows a schematic drawing of a support device according to another embodiment of the present invention wherein the actuator comprises a spindle drive;
- Fig. 4: shows a schematic drawing of support device according to another embodiment of the present invention comprising pre-tensioning springs.

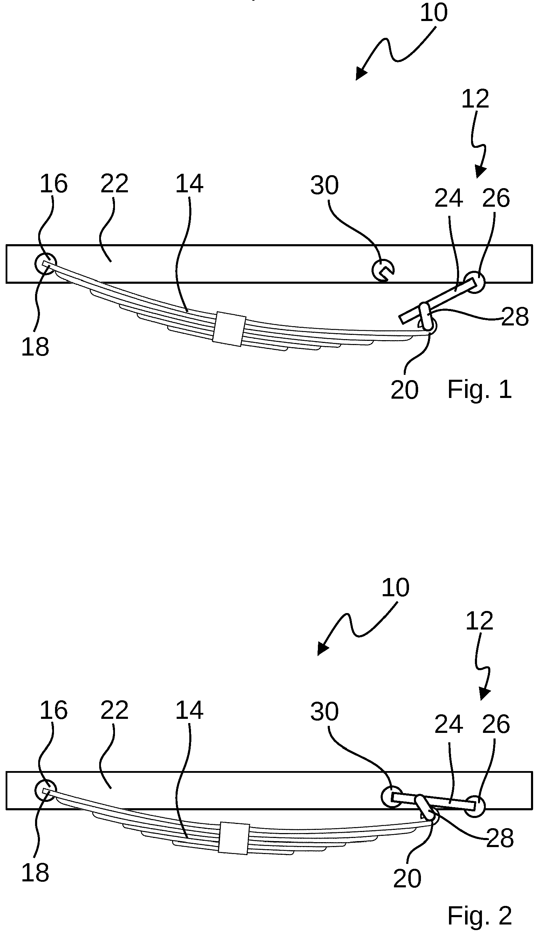

**Fig. 1** shows a suspension assembly 10 comprising a support device 12 and a spring device, in this case a leaf spring 14. The leaf spring 14 has a first mount portion 18 and the second mount portion 20. The first mount portion 18 is mounted on a pivot 16. The pivot 16 is connected to or mounted on a chassis 22 of a vehicle. At the second mount portion 20, the leaf spring 14 is mounted on the support device 12.

The support device 12 comprises a lever 24, a mount 26, a shackle device 28 and a lever locking device 30. The lever 24 is mounted on the mount 26 in a pivotable fashion. The shackle device 28 couples the lever 24 to the second mount portion 20 of the leaf spring 14 such that the support device 12 supports the leaf spring 14.

The shackle device 28 may, for example, comprise two rubber bushings spaced apart and connected via a housing, wherein a first bushing is connected to the lever 24 and a second bushing is connected to the second mount portion 20 of the leaf spring 14. In this way, the shackle device 28 may transmit force and some momentum between the leaf spring 14 and the lever 24 while still allowing shape and length changes as well as pivoting of the leaf spring 14.

By pivoting the lever 24, the leaf spring 14 can be pushed further down on one end which, in turn will push up the chassis 22 and thus will increase the level of the vehicle, e.g. for easier unloading or adapting vehicle height to outside constraints such as dock level height. Support device 12 thus comprises a leveling mechanism.

The support device 12 may not be able to sustain dynamic forces exerted on it when the vehicle is driving. Thus, when driving, the vehicle should be at a fixed height. As shown in **Fig. 2****,** when driving, the lever 24 may be moved into the lever locking device 30 which securely locks the lever in place. In this way, when the vehicle is in motion, the forces resulting from for example acceleration, deceleration, turning corners, driving over potholes are not affecting and/or loading the components of the support device 12 and its leveling mechanism.

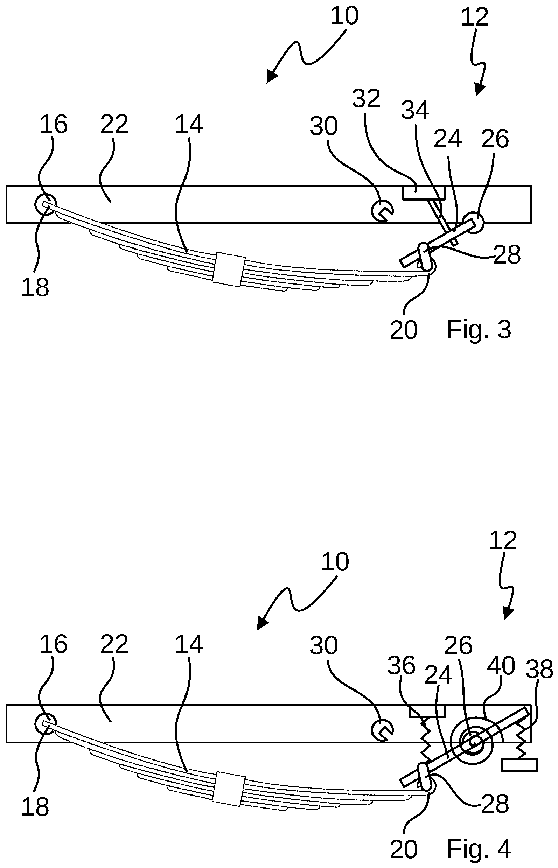

For pivoting the lever 24, the support device 12 comprises a drive system, in particular an electro-mechanic, hydraulic or pneumatic drive system. For example, as shown in **Fig. 3****,** an actuator 32 may be connected to the lever 24 by means of a spindle 34. The spindle 34 goes through the lever 24 and has a threading engagement with the lever 24. Thus, when the actuator 32, which, for example, be an electric motor, turns the spindle 34, the lever 24 pivots, thus setting the leaf spring 14 height and the vehicle's level.

In further embodiments, another lever locking device 30 may be provided that can lock the lever 24 in any position or one or more predefined different positions, not only in the position shown in Fig. 2.

In further embodiments, the spindle 34 may, for example, be self-locking. Such a spindle 34 may be used as an additional lever locking device. In particular, while the lever 24 is extended downwards to lift the chassis 22, the spindle 34 will hold the position without requiring further force and/or momentum from the actuator 32.

In further embodiments, the actuator 32 and/or the lever 34 may for example comprise a clutch device to lock the lever 34.

In further embodiments, the actuator 32 may be for example integrated into the mount 26 or may, for example comprise a bevel gear to allow the actuator 32 to be arranged on or near the chassis if space is limited, for example between the lever 24 and the chassis 22 or the vehicle frame.

As shown in **Fig. 4****,** to support the function of the actuator 32, mechanical storage devices such as, for example, spring 36, spring 38 and/or spring 40 may be connected between the lever 24 and the chassis 22. Springs 36 and 38 may, for example, be helical springs while spring 40 may, for example, be a torsion spring. The springs 36, 38, 40 offset at least part of the force exerted by the vehicle on the lever 24.

Furthermore, when the vehicle is lowered, that springs 36, 38, 40 may for example store energy which can then be released when the vehicle is being lifted. Thus, the springs 36, 38, 40 support the actuator 32 and may reduce the actuator energy demand for the lifting operation. Maximum power requirement of the actuator 32 may also be reduced, which allows a reduced size of the actuator 32.

It is, of course, possible to combine the embodiments mentioned above freely. For example, further embodiments may comprise a locking device 30, an actuator 32 with a spindle 34 and any of the springs 36, 38, 40 or any combination of these.

### LIST OF REFERENCES

- 10: suspension assembly
- 12: support device
- 14: leaf spring (spring device)
- 16: pivot
- 18: first mount portion
- 20: second mount portion
- 22: chassis
- 24: lever
- 26: mount
- 28: shackle device
- 30: lever locking device
- 32: actuator
- 34: spindle
- 36: spring (mechanical energy storage device)
- 38: spring (mechanical energy storage device)
- 40: spring (mechanical energy storage device)

## Claims

1. Support device (12) for supporting a suspension assembly (10) mounted on a chassis of a vehicle, wherein the support device (12) comprises a pivotable lever (24) connected to an actuator device (32) for pivoting the lever (24), wherein the lever (24) comprises a support portion for supporting a spring device (14) of the suspension assembly (10) and wherein the lever (24) is arranged relative to the chassis such that pivoting of the lever (24) lifts or lowers the chassis relative to the spring device (14).

2. Support device according to claim 1, **characterized in that** the support portion comprises a shackle device (28) for receiving a mounting portion (18, 20) of the spring device (14).

3. Support device according to any of the previous claims, **characterized in that** the lever (24) and/or the actuator device (32) are connected to a chassis of a vehicle.

4. Support device according to any of the previous claims, **characterized in that** the actuator device (32) comprises a bevel gear.

5. Support device according to any of the previous claims, **characterized in that** the actuator device (32) is connected to the lever (24) by a spindle (34) in threading connection with the lever (24).

6. Support device according to any of the previous claims, **characterized in that** the support device (12) comprises a lever locking device (30) for locking the lever (24) in a predetermined position.

7. Support device according to any of the previous claims, **characterized in that** the support device (12) comprises a mechanical energy storage device (36, 38, 40) arranged and configured to receive mechanical energy from lowering the chassis and to release mechanical energy when lifting the chassis.

8. Support device according to claim 7, **characterized in that** the mechanical storage device (36, 38, 40) connects the lever to the chassis.

9. Support device according to claim 7 or 8, **characterized in that** the mechanical energy storage device comprises a spring (36, 38, 40).

10. Suspension assembly comprising a spring device (14), wherein the spring device (14) is supported on at least one support device (12) according to any of the previous claims.
